# EUROPEAN PATENT APPLICATION

(11) **EP 1 108 968 A1**
(43) Date of publication of application: **20.06.2001**
(21) Application number: 00126127.0
(22) Date of filing: 30.11.2000
(51) Int. Cl.: F28F 21/06, F28D 7/00

(54) **Heat exchanger, particularly for use in motor vehicles**

(30) Priority: 03.12.1999 IT TO991064
(71) Applicant: MAGNETI MARELLI CLIMATIZZAZIONE S.p.A., 10046 Poirino (Torino) (IT)
(72) Inventor: Parrino, Maurizio, 10135 Torino (IT); Mannoni, Alberto, 10135 Torino (IT); Dentis, Luigi, 10142 Torino (IT); Dongiovanni, Mery, 10022 Carmagnola (Torino) (IT)
(74) Representative: Quinterno, Giuseppe

(57) **Abstract**

The heat exchanger (HE) comprises a plurality of flat panels (A, B) of tubes (1) each of which comprises a row of parallel tubes (1) of equal diameter, made of plastics material, and interconnected side by side. The panels (A, B) are interconnected in a stacked arrangement with a transverse relative offset substantially equal to the radius of a tube (1) so that the tubes (1) of one panel (A) extend in the recesses defined between adjacent tubes (1) of at least one neighbouring panel (B).

## Description

The present invention relates to a heat-exchanger, particularly for use in motor vehicles.

An object of the present invention is to provide a heat exchanger made of plastics material which is easy and inexpensive to produce and which has large heat-exchange surfaces.

This and other objects are achieved, according to the invention, by a heat exchanger the main characteristics of which are defined in appended Claim 1.

Further characteristics and advantages of the invention will become clear from the following detailed description, given purely by way of non-limiting example with reference to the appended drawings, in which:
Figure 1 is a partial perspective view of a panel of tubes for use in a heat exchanger according to the invention,
Figure 2 is a cross-section, on an enlarged scale, of a tube used for forming a heat exchanger according to the invention,
Figures 3a and 3b are partial side views of two variants of panels of tubes stacked to form a heat exchanger according to the invention,
Figure 4 is a partial perspective view which shows the stacking structure of panels of tubes in a heat exchanger according to the invention, and
Figures 5a and 5b show two variants of a heat exchanger according to the invention.

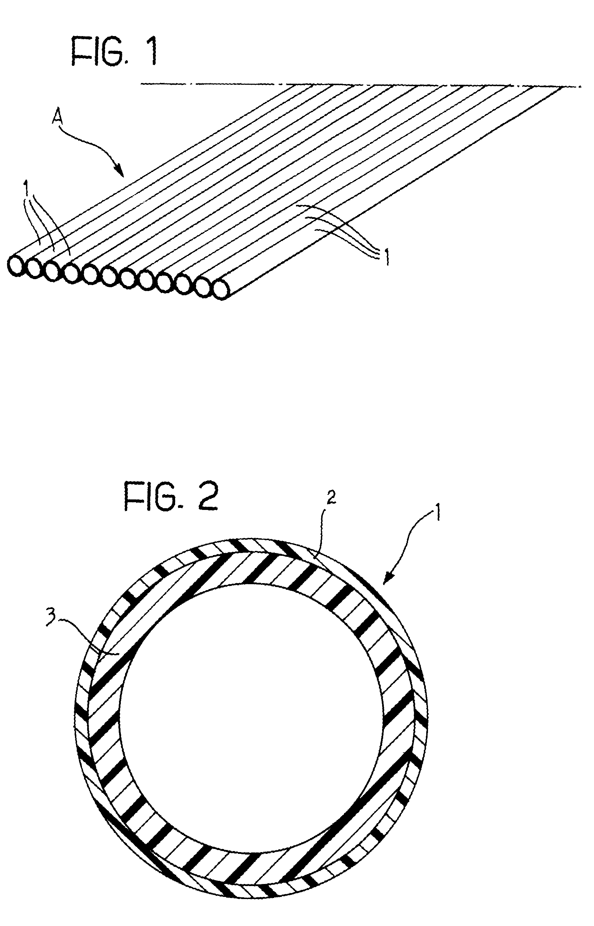

With reference to Figure 1, a plurality of flat panels of tubes such as that indicated A in Figure 1 are used to produce a heat exchanger according to the invention. This panel is formed by a flat row of parallel tubes 1 produced, for example, by extrusion of a plastics material such as a polyamide, and interconnected side by side.

The tubes 1 have, for example, an inside diameter of 2 mm and a wall thickness of 0.2 mm and may be interconnected by gluing.

Alternatively, as shown in Figure 2, each tube 1 may have a wall having two layers, with an outer layer 2 constituted by a heat-sealable thermoplastic material such as a Nylon 6, and an inner layer 3 constituted by a Nylon 6-6.

With tubes having the structure shown in Figure 2, the tubes of a panel may be interconnected by heat-sealing.

Alternatively, each panel may be formed integrally by extrusion.

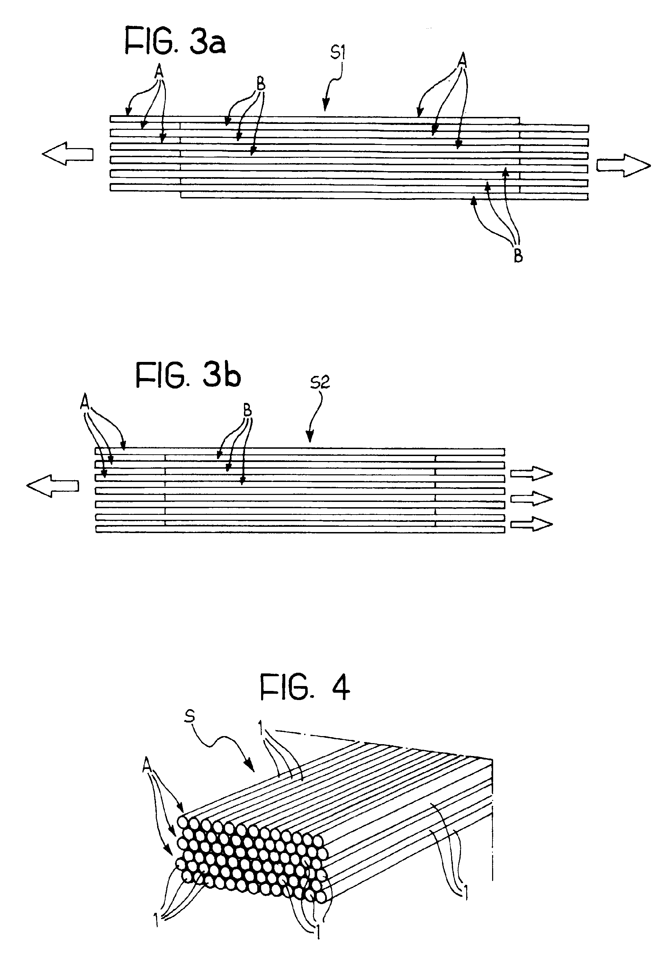

As can be seen in Figure 4, in order to form a heat exchanger according to the invention, several panels of the type described above are arranged in a stack with a transverse offset substantially equal to the radius of a tube 1 between one panel and another. The tubes of each panel thus extend in the recesses defined between adjacent tubes of at least one other, neighbouring panel.

The individual panels of the stack are preferably but not necessarily constituted by the same number of tubes.

Figures 3a and 3b show two stacks S1 and S2 of panels of tubes. In the embodiments shown in these drawings, each stack comprises a first set of panels and a second set of panels through which two different fluids are to flow. In both embodiments, the panels of the first set, which are indicated A, are intercalated with the panels of the second set, which are indicated B. The ends of the panels A of the first set are offset longitudinally relative to the ends of the panels B of the second set.

In the embodiment of Figure 3a, all of the panels A and B have substantially the same length and the panels A of the first set are offset longitudinally relative to the panels B of the second set.

In the embodiment of Figure 3b, the panels A of the first set are longer than the panels B of the other set.

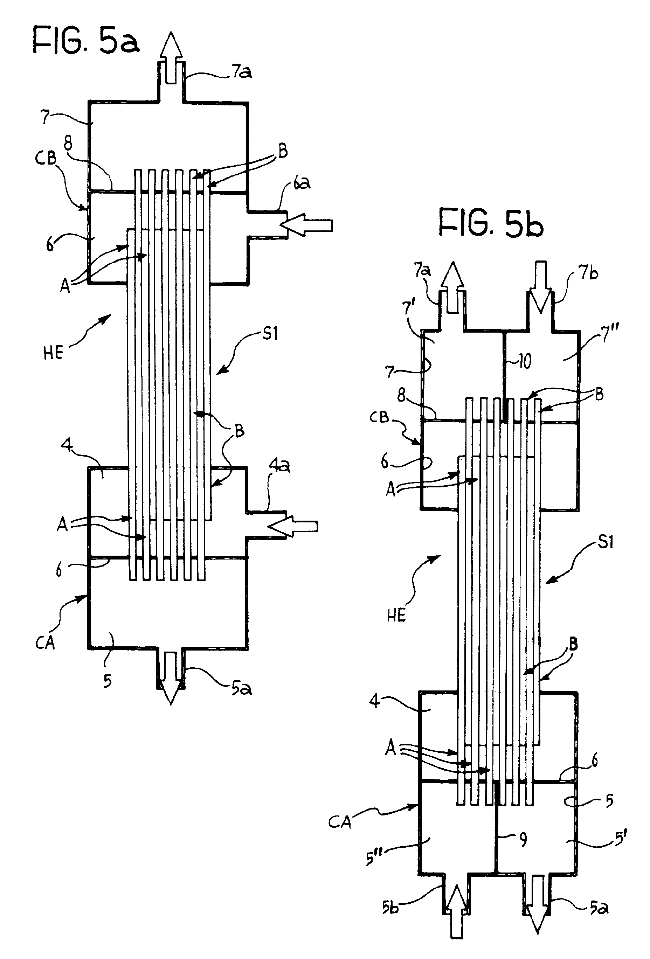

Figure 5a shows a heat exchanger generally indicated HE, comprising a stack S1 of panels of the type described above with reference to Figure 3a.

The ends of the stack S1 of panels are connected in a leaktight manner to respective manifolds indicated CA and CB.

The manifold CA comprises a hollow casing divided into two chambers 4 and 5 by an intermediate dividing wall 6. This casing is advantageously made of a plastics material and the ends of the panels A and B extend through a wall thereof and then into the chamber 4. The panels A also extend through the dividing wall 6 and open into the chamber 5, whereas the ends of the panels B open in the chamber 4.

The chambers 4 and 5 have respective connectors 4a and 5a for the inlet of a first fluid and for the outlet of a second fluid, respectively, the fluids being intended to flow through the tubes of the panels B and A, respectively.

The manifold CB also comprises a casing, for example, made of plastics material, divided into two chambers 6 and 7 by a dividing wall 8. The ends of the tubes of the panels A extend through a wall of the casing of the manifold CB and open in the chamber 6, whereas the ends of the tubes of the panels B also extend though the dividing wall 8 and open in the chamber 7.

The chambers 6 and 7 have respective inlet and outlet connectors 6a and 7b.

In the heat exchanger HE according to Figure 5a, a first fluid can flow through the tubes of the panels A, entering through the inlet connector 6a of the manifold CB, passing through the tubes of the panels A, and thus reaching the chamber 5 of the manifold CA and emerging through the outlet connector 5a thereof. Naturally, the flow through the panels of tubes A may take place in the opposite direction to that described above and indicated by the arrows of Figure 5a.

Similarly, again with reference to Figure 5a, the second fluid can flow through the tubes of the panels B, entering through the connector 4a of the manifold CA, passing through the panels B, and emerging from the outlet connector 7a of the chamber 7 of the manifold CB. Naturally, in this case also, the direction of flow of the fluid may be the reverse of that described.

It will be clear to a skilled person that the heat exchanger HE of Figure 5a may be modified by using a stack of panels of the type shown in Figure 3b.

Figure 5b shows another heat exchanger HE according to the invention, comprising a stack S1 of panels A and B of the type shown in Figure 3a. Respective manifolds CA and CB are connected to the ends of this stack of panels of tubes. In this embodiment, the manifold CA again comprises a hollow casing, for example, made of plastics material and divided into two chambers 4 and 5 by a dividing wall 6. The chamber 5 is divided into two sub-chambers 5' and 5", separated in a leaktight manner by a partition 9.

The ends of the tubes of the panels B open in the chamber 4 of the manifold A, whereas the ends of the tubes of the panels A extend through the dividing wall 6, some opening in the sub-chamber 5', and some in the sub-chamber 5". These sub-chambers have respective connectors 5a and 5b for the outlet and the inlet of a flow of a first fluid, respectively.

The manifold CB is divided into two chambers 6 and 7 by a dividing wall 8. The chamber 7 is subdivided into two sub-chambers 7' and 7" separated in a leaktight manner by a partition 10.

The ends of the tubes of the panels A open in the chamber 6 of the manifold CB. The ends of the tubes of the panels B extend through the dividing wall 8, some tubes opening in the sub-chamber 7' and some in the sub-chamber 7". These sub-chambers have respective connectors 7a and 7b for the outlet and the inlet of a flow of a second fluid, respectively.

With the arrangement shown in Figure 5b, the flow of a first fluid from the sub-chamber 5" can circulate through some of the panels of tubes A until it reaches the chamber 6 of the manifold CB and can therefore return towards the manifold CA through the other panels A and, in particular, into the sub-chamber 5' of the manifold CA. A flow of a second fluid, on the other hand, can flow from the chamber 7", through some of the panels of tubes B until it reaches the chamber 6 of the manifold CA, and then - flowing in the opposite direction in the remaining panels B - can return to the manifold CB, in particular, into the sub-chamber 7' thereof.

Naturally, as is clear to experts in the art, with suitable modifications, the heat exchanger HE of Figure 5b may be formed with the use of a stack of panels of the type shown in Figure 3b.

With modifications which are also clear to an expert in the art, heat exchangers may also be produced in which a fluid flows from one manifold to the other, flowing in the same direction through all of the panels of a first set, whilst a second fluid flows in a first direction through some of the panels of a second set and hence in the opposite direction through the remaining panels of this set.

Naturally, the principle of the invention remaining the same, the forms of embodiment and details of construction may be varied widely with respect to those described and illustrated purely by way of non-limiting example, without thereby departing from the scope of the invention as defined in the appended claims.

## Claims

1. A heat exchanger (HE), particularly for use in motor vehicles, comprising a plurality of flat panels (A, B) of tubes (1), each panel comprising a row of parallel tubes (1) of equal diameter, made of plastics material, and interconnected side by side, the panels (A, B) being interconnected in a stacked arrangement with a transverse relative offset substantially equal to the radius of a tube (1), so that the tubes (1) of one panel (A) extend in the recesses defined between adjacent tubes (1) of at least one neighbouring panel (B).

2. A heat exchanger according to Claim 1, in which the tubes (1) of each panel (A, B) are interconnected by gluing.

3. A heat exchanger according to Claim 1, in which the tubes (1) have at least one outer layer (2) of heat-sealable material, and the tubes (1) of each panel (A, B) are interconnected by heat-sealing.

4. A heat exchanger according to Claim 1, in which each panel (A, B) of tubes (1) is formed integrally by extrusion.

5. A heat exchanger according to any one of Claims 2 to 4, in which the panels (A, B) are interconnected by gluing.

6. A heat exchanger according to Claim 3 or Claim 4, in which the panels (A, B) of tubes (1) are interconnected by heat-sealing.

7. A heat exchanger according to any one of the preceding claims, comprising a first set and a second set (A, B) of panels of tubes (1), through which two different fluids are intended to flow, and in which the panels (A) of the first set are intercalated with the panels (B) of the second set.

8. A heat exchanger according to Claim 7, in which the ends of the panels (A) of the first set are offset longitudinally relative to the ends of the panels (B) of the second set.

9. A heat exchanger according to Claim 8, in which all of the panels (A, B) have substantially the same length and the panels of the first set (A) are offset longitudinally relative to the panels of the second set (B).

10. A heat exchanger according to Claim 8, in which the panels of one set (A) are longer than the panels of the other set (B).

11. A heat exchanger according to any one of Claims 7 to 10, in which the ends of the first and second sets of panels (A, B) are connected in a leaktight manner to respective manifolds (CA, CB) for the inlet and the outlet of fluids which are to pass through the panels.

12. A heat exchanger according to Claim 11, in which respective manifolds (CA, CB) are connected to the opposite ends of the stack (S1, S2) formed by the panels (A, B), each manifold being divided into a first chamber and a second chamber (4, 5; 6, 7) which are separated from one another and in which the ends of the first set of panels (A) and of the second set of panels (B) open, respectively.

13. A heat exchanger according to any one of Claims 7 to 12, in which the tubes (1) of the panels of at least one of the sets (A, B) are divided into a first group and a second group through which a fluid is intended to flow in opposite directions, and in which the chamber of at least one manifold (CA, CB) into which the ends of the at least one set of panels extend is subdivided into two sub-chambers (5', 5"; 7', 7") which are separated by a partition (9; 10) and communicate with the tubes (1) of the first group and of the second group, respectively.
